# EUROPÄISCHE PATENTSCHRIFT

(11) **EP 2 759 939 B1**
(45) Veröffentlichungstag und Bekanntmachung des Hinweises auf die Patenterteilung: **08.06.2016**
(21) Anmeldenummer: 13152993.5
(22) Anmeldetag: 29.01.2013
(51) Int. Cl.: G06F 11/263, G06F 11/34, G06F 11/36

(54) **Verfahren zum Manipulieren einer Speicheroperation eines Steuergeräteprogramms auf einen virtuellen oder realen Speicher**
Method for manipulating a memory operation of a control device program on a virtual or real storage device
Procédé de manipulation d'une opération de mémorisation d'un programme d'appareil de commande sur une mémoire virtuelle ou réelle

(43) Veröffentlichungstag der Anmeldung: 30.07.2014
(73) Patentinhaber: dSPACE digital signal processing and control engineering GmbH, 33102 Paderborn (DE)
(72) Erfinder: Kiffmeier, Ulrich, Dr., 33428 Harsewinkel (DE); Sielhorst, Tobias, Dr., 33415 Verl (DE)

(56) Entgegenhaltungen:
- WO-A1-2005/045538
- US-A1- 2009 049 339
- YOSHIHIRO OYAMA ET AL: "A Hypervisor for Injecting Scenario-Based Attack Effects", COMPUTER SOFTWARE AND APPLICATIONS CONFERENCE (COMPSAC), 2011 IEEE 35TH ANNUAL, IEEE, 18. Juli 2011 (2011-07-18), Seiten 682-687, XP031972300, DOI: 10.1109/COMPSAC.2011.95 ISBN: 978-1-4577-0544-1
- DANIEL SKARIN ET AL: "GOOFI-2: A tool for experimental dependability assessment", DEPENDABLE SYSTEMS AND NETWORKS (DSN), 2010 IEEE/IFIP INTERNATIONAL CONFERENCE ON, IEEE, PISCATAWAY, NJ, USA, 28. Juni 2010 (2010-06-28), Seiten 557-562, XP031729424, ISBN: 978-1-4244-7500-1

## Beschreibung

### GEBIET DER ERFINDUNG

Die vorliegende Erfindung bezieht sich auf ein Verfahren zum Manipulieren einer Speicheroperation eines Steuergeräteprogramms auf einen Speicher einer virtuellen oder realen elektronischen Steuerungseinheit (ECU), wie sie z.B. in Fahrzeugen zum Einsatz kommt.

Der Begriff Steuergeräteprogramm kann im Rahmen der vorliegenden Erfindung verstanden werden als Mess-, Steuer-, Regel- und/oder Kalibrierungsprogramm zur Steuerung einer elektronischen Steuerungseinheit in einem Fahrzeug. Unter dem Begriff Steuergeräteprogramm können sowohl einzelne Programmkomponenten mit unterschiedlichen Funktionen sowie komplexe Programm-Architekturen mit mehreren, miteinander verbundenen Programm-Komponenten fallen. Der Begriff elektronische Steuerungseinheit kann im Rahmen der vorliegenden Erfindung verstanden werden als ein Steuerungssystem, beispielsweise ein Steuergerät in einem Kraftfahrzeug. Die elektronische Steuerungseinheit kann dabei beispielsweise zum Messen, Steuern, Regeln und/oder Kalibrieren von Fahrzeugkomponenten dienen. Der Begriff Fahrzeug wird im Folgenden als umfassende Bezeichnung für Wasserfahrzeuge, Landfahrzeuge, Luftfahrzeuge, Raumfahrzeuge und/oder Kombinationen davon verwendet.

### HINTERGRUND

Speicherfehler sind bei Steuergeräten nicht ungewöhnlich und können je nach Sicherheitslevel fatale Folgen haben. Die Ursachen von Speicherfehlern sind vielfältig:
- EEPROM und Flash Speicher zum Speichern nichtflüchtiger Daten haben eine begrenzte Anzahl von Schreibzyklen. Meist müssen daher mehrere redundante Speicherblöcke mit Checksummen verwaltet werden. Das Schreiben der EEPROM bzw. Flash-Speicherblöcke dauert relativ lange. Während der Bearbeitung des Speicher-Jobs, der sich über mehrere Zyklen erstreckt, können weitere Fehler auftreten.
- Adress- und Datenleitungen von externen Speicherbausteinen können defekt sein.
- Störungen durch elektromagnetische Felder (EMV) oder ionisierende Strahlung können zu sporadischen Fehlern führen.
- Temperaturprobleme und allgemeine Alterungsprozesse.

Eine einfache Überlegung zeigt, dass diese Probleme bei sicherheitskritischen Steuergeräten nicht vernachlässigt werden können: Wenn ein Steuergerät in 1 Million Fahrzeugen verbaut wird und ca. 5000 Betriebsstunden hat, dann wird ein Task mit einer Zykluszeit von 1ms insgesamt ca. 1,8*10¹⁶ mal ausgeführt. Während dieser Zeit tritt fast garantiert jeder mögliche Hardware- und Softwarefehler auf.

Beim Hardware- und Softwaredesign von Steuergeräten müssen also Vorkehrungen getroffen werden, um derartige Speicherfehler zu erkennen und abzufangen. Diese Vorkehrungen müssen für die Freigabe eines sicherheitskritischen Steuergerätes getestet werden. Bisher gestaltet sich dieser Test aber sehr schwierig und aufwändig, da Fehler nur mit spezieller Hardware oder mit aufwändigen Hardwareemulatoren provoziert werden können.

Insbesondere die Nutzung nichtflüchtiger Speicher (NvRAM) wirkt sich auch auf die Applikationssoftware einer ECU aus. Ähnlich wie bei Bus-Fehlern müssen Fehlerzustände beim Lesen und Schreiben des nichtflüchtigen Speichers abgefangen und behandelt werden. Das ist auch deshalb schwierig, weil sich Lese-/Schreibvorgänge über mehrere Zyklen hinziehen können.

In der ISO Norm 26262 sind "Fault Injection Tests" auf allen Ebenen empfohlen, bzw. für die höheren Sicherheitslevel (ASIL-D) sogar vorgeschrieben.

Die bisher für diese Zwecke verwendeten Ansätze zum Testen von Speicherfehlern basieren auf Hardware-spezifischen Prototypen oder Hardwareemulatoren, welche sehr aufwendig sind und erzeugte Fehlerzustände oft nur schwer exakt reproduzieren können. Weiterhin existieren Methoden zur softwarebasierten Fehlerinjektion, wie z.B in *GOOFI-2*: *A Tool for Experimental Dependability Assessment* (D. Skarin et al., DOI: 10.1109/DSN.2010.5544265) beschrieben. Diese Methoden sind allerdings nicht für die Simulation von Speicherfehlern in nichtflüchtigen Speichern geeignet.

### DIE ERFINDUNG IM ÜBERBLICK

Es ist Aufgabe der vorliegenden Erfindung ein effizientes Verfahren zum Simulieren und Testen von Speicherfehlern nichtflüchtiger Speicher, wobei Zugriffe auf den nichtflüchtigen Speicher durch eine Speicherabstraktions-Programmkomponente gekapselt und abstrahiert werden, bereitzustellen, welches über den gesamten Entwicklungsprozess flexibel einsetzbar ist.

Diese Aufgabe wird gelöst durch ein Verfahren zum Manipulieren eines ersten Speicherzugriffs, welche über ein Steuergeräteprogramm einer virtuellen oder realen elektronischen Steuergeräteeinheit in einem Fahrzeug durchgeführt wird, wobei Manipulieren des Speicherzugriffs durch eine Speichermanipulations-Programmkomponente erfolgt, und wobei das Verfahren folgende Schritte umfasst:
∘ Bereitstellen eines Satzes von Manipulationsfunktionen, wobei der Satz von Manipulationsfunktionen zumindest eine Manipulationsfunktion umfasst, die einen zu lesenden Datenblock manipuliert, indem gelesene Datenwerte durch andere vorbestimmte Datenwerte ersetzt werden,
∘ Auswählen mindestens einer Manipulationsfunktion,
∘ Aktivieren der Speichermanipulations-Programmkomponente, welche einen von dem Steuergeräteprogramm veranlassten Speicherzugriff gemäß der ausgewählten Manipulationsfunktion bei Ausführen des Steuergeräteprogramms verändert
dadurch gekennzeichnet, dass die Speichermanipulations-Programmkomponente (100) eine eigenständige Programmkomponente bildet und über definierte Schnittstellen mit einer Speicherabstraktionsschnittstellen-Programmkomponente (30) und Speicherabstraktions-Programmkomponenten (7) und/oder Speicheremulations-Programmkomponente (8) verbunden ist oder dass die Speichermanipulations-Programmkomponente (100) einen Teil einer Speicherabstraktionsschnittstellen-Programmkomponente (30) und/oder Speicherabstraktions-Programmkomponenten (7) und/oder Speicheremulations-Programmkomponente bildet,
wobei der Speicherzugriff auf nichtflüchtige Daten Speicher erfolgt und von der Speicherabstraktions-Programmkomponente (7) gekapselt wird.

Der Erfindung liegt die Erkenntnis zu Grunde, dass ein frühzeitiges Testen der Reaktion eines Steuergeräteprogrammes auf mögliche Hardwarefehler bezüglich einer Speicheroperation bei der Komplexität heutiger Steuergeräteeinheiten, eine effizientere Entwicklung der entsprechenden Steuergeräteeinheit ermöglicht, als wenn mit entsprechenden Test bis zur Fertigstellung erster Prototypen gewartet werden muss.

Ein wesentlicher Vorteil der Erfindung besteht darin, dass die Erfindung geeignet ist zum Test von Speicherfehlern in Offline-Simulationen. Somit kann die Reaktion des Steuergeräteprogramms auf Speicherfehler schon frühzeitig getestet werden, bevor ein Hardware-Prototyp existiert. Die Gesamtsimulation des Steuergerätes inklusive seiner Umgebungsmodelle kann aufgrund der virtuellen Zeitbasis beliebig verlangsamt bzw. angehalten und wieder fortgesetzt werden, ohne das simulierte Verhalten zu ändern. Fehler im Verhalten des Steuergeräteprogramms können mit Hilfe eines Diagnoseprogramms während einer Offline-Simulation wesentlich einfacher lokalisiert werden als in einer Echtzeitsimulation. Bei einer deterministischen Simulation sind die Fehler reproduzierbar und ihre Auswirkungen können so besser analysiert werden. Selbst Zufallszahlen können reproduzierbar erzeugt und genutzt werden durch eine Speicherung des Anfangswertes des Zahlengenerators.

Gemäß einer bevorzugten Ausführungsform der vorliegenden Erfindung manipuliert die Manipulationsfunktion einen zu schreibenden Datenblock, indem zu schreibende Datenwerte durch andere vorbestimmte Datenwerte ersetzt werden.

Um die Reaktion des Steuergeräteprogramms auch Schreibfehler beim Speicherzugriff zu testen, wird in dieser Ausführungsform ein zu schreibender Datenblock durch einen vorbestimmten Datenblock ersetzt. Der vorbestimmte Datenblock wird dabei durch ein definiertes Testszenario vorgegeben.

Gemäß einer weiteren bevorzugten Ausführungsform der vorliegenden Erfindung manipuliert die Manipulationsfunktion einen zu lesenden Datenblock, indem gelesene Datenwerte durch andere vorbestimmte Datenwerte ersetzt werden.

Mit dieser Ausführungsform kann die Reaktion des Steuergeräteprogramms auf einen etwaigen Lesefehler beim Speicherzugriff getestet werden. Dabei wird ein vom Steuergeräteprogramm ausgegebener Lesebefehl zum Speicherzugriff ausgeführt und die Manipulationsfunktion verändert den aus dem Speicher ausgelesenen Datenblock.

Gemäß einer weiteren bevorzugten Ausführungsform der vorliegenden Erfindung überschreibt die Manipulationsfunktion einen Wiedergabewert einer Speicheroperation.

Gemäß einer weiteren vorteilhaften Ausführungsform der vorliegenden Erfindung manipuliert die Manipulationsfunktion einen Status einer Speicherabstraktionsschnittstellen-Programmkomponente und/oder überschreibt den Status verbundener Speicherabstraktions-Programmkomponenten.

Im Rahmen der vorliegenden Erfindung bezeichnet eine Speicherabstraktions-Programmkomponente spezielle Programmkomponenten eines Steuergerätes, welche den spezifischen Hardwareeigenschaften von EEPROM- und Flash-Speichern - wie langsamer Schreib-/Lesezugriff, begrenzte Anzahl von Schreibzyklen, Nutzung redundanter Blöcke - Rechnung tragen, indem sie den Speicherzugriff kapseln und nach außen abstrahieren.

Beim Durchführen einer Speicheroperation durch das Steuergeräteprogramm wird neben den zu schreibenden oder zu lesenden Daten eine Statusvariable einer Speicherabstraktionsschnittstellen-Programmkomponente oder einer Speicherabstraktions-Programmkomponenten gesetzt, welche unter anderem angibt, ob die für eine Speicheroperation benötigten Treiber bereits initialisiert wurden, ob sich die angesprochenen Speichermodule gerade im Leerlauf befinden oder zur Zeit in Benutzung sind. Diese Statusvariable wird in dieser Ausführungsform von der Manipulationsfunktion überschrieben.

Gemäß einer weiteren bevorzugten Ausführungsform der vorliegenden Erfindung wird die erste Speicheroperation im Rahmen eines ersten Jobs ausgeführt und wird mindestens eine zweite Speicheroperation im Rahmen eines zweiten Jobs ausgeführt, wobei die Bearbeitung der Jobs asynchron erfolgt und die Manipulationsfunktion eine Bearbeitung der asynchronen Jobs manipuliert, indem sie die Jobs abbricht, verzögert, und/oder ein Jobresultat verfälscht.

Im Rahmen der vorliegenden Erfindung sind Jobs als Auftrag zur Durchführung einer Speicheroperation zu verstehen, wobei der Job ohne Eingreifen einer andern Komponente erfüllt werden kann. Eine Speicherzugriffsoperation kann längere Zeit benötigen, deshalb erhält die Speicherverwaltung einen Auftrag für die Operation, welcher als Job bezeichnet wird. Die Speicherverwaltung führt diesen asynchron aus und gibt Rückmeldung an den Auftraggeber, wenn der Job beendet wurde. Eine "asynchrone" Ausführung liegt dann von, wenn die aufrufende Programmkomponente einen Speicherjob anstößt und dann zunächst andere Aufgaben erledigt, während der Speicherjob noch quasiparallel läuft. Später kann die aufrufende Programmkomponente sich vom Speicherservice benachrichtigen lassen, ob der Job erfolgreich war, oder die aufrufende Programmkomponente fragt das Resultat des Jobs aktiv ab (Polling).

Gemäß einer weiteren bevorzugten Ausführungsform der vorliegenden Erfindung markiert die Manipulationsfunktion Speicherblöcke als ungültig.

Durch das Markieren eines Speicherblocks als ungültig, wird angezeigt, dass die Speicheroperation nicht ausführbar ist bzw. ungültige Daten liefert. Auf diese Weise kann getestet werden, wie sich das Steuergeräteproramm verhält, wenn ein Datenblock, welcher für eine Speicheroperation angefordert wurde nicht zur Verfügung steht, beziehungsweise für einen Lesezugriff, die Daten des Datenblocks nicht auslesbar sind.

Jede der vorangegangenen Ausführungsformen der vorliegenden Erfindung kann derart fortgebildet werden, dass das Ausführen der Manipulationsfunktion einmalig zu einem absoluten oder relativen Zeitpunkt erfolgt.

Das Manipulieren einer Speicheroperation, welche von dem Steuergeräteprogramm initiiert wurde, erfolgt in dieser bevorzugten Ausführungsform einmalig. Die Ausführung erfolgt dabei zu einem absoluten oder relativen Zeitpunkt, z.B. x Sekunden, nachdem das Steuergeräteprogramm gestartet ist.

Alternativ oder in Kombination können die vorangegangenen Ausführungsformen fortgebildet werden, indem das Ausführen der Manipulationsfunktion periodisch über eine in einem Testszenario bestimmte Laufzeit erfolgt.

Alternativ oder in Kombination können die vorangegangenen Ausführungsformen fortgebildet werden, indem das Ausführen der Manipulationsfunktion sporadisch über eine in einem Testszenario bestimmte Laufzeit erfolgt.

Alternativ oder in Kombination können die vorangegangenen Ausführungsformen fortgebildet werden, indem das Ausführen der Manipulationsfunktion mit einer vorgegebenen Wahrscheinlichkeitsverteilung erfolgt.

Um neben gezielten Speicheroperationen auch zufällig auftretende Speicherfehler zu simulieren, wird in dieser bevorzugten Ausführungsform der vorliegenden Erfindung die Manipulation gemäß einer bestimmten Wahrscheinlichkeitsverteilung aufgerufen. Durch Speichern der Startwerte für die verwendeten Zufallsgeneratoren sind auch diese Fehlersimulationen reproduzierbar.

Alternativ oder in Kombination können die vorangegangenen Ausführungsformen fortgebildet werden, indem das Ausführen der Manipulationsfunktion abhängig von einem vorbestimmten Ereignis ist.

Das Ausführen der Manipulationsfunktion abhängig von einem bestimmten Ereignis ermöglicht das gezielte Manipulieren einer Speicheroperation, z.B. wenn die Programmkomponente x einen Speicherzugriff initiiert, dann führe die Manipulationsfunktion aus.

In einer weiteren alternativen Ausführungsform hat die Speichermanipulations-Programmkomponente direkten Zugriff auf eine Speicherbank einer elektronischen Steuergerätekomponente.

Jede der vorangegangenen Ausführungsformen der vorliegenden Erfindung kann derart ausgestaltet sein, dass eine Steuerung der Speichermanipulations-Programmkomponente durch Codegenerierung vor einer Kompilation des Steuergeräteprogramms erfolgt.

Durch eine Codegenerierung der Speichermanipulations-Programmkomponente vor der Kompilation des Steuergeräteprogramms ist das Verfahren sehr effizient hinsichtlich der Laufzeit. Diese Ausführungsform ist insbesondere dann vorteilhaft, wenn der Code der Speichermanipulations-Programmkomponente nur wenige Konfigurationsparameter enthält, die mit einem ohnehin vorhandenen Kalibrierservice (z.B. XCP/A2L) verstellt werden können. In diesem Fall wird kein eigener Service für die Speichermanipulations-Programmkomponente benötigt, d.h. die Laufzeit und der RAM Speicherverbrauch wird minimiert.

Alternativ kann jede der vorangegangenen Ausführungsformen derart ausgestaltet sein, dass eine Steuerung der Speichermanipulations-Programmkomponente durch einen Service erfolgt, der von dem Steuergeräteprogram definiert ist und der Befehle von einem Bedienprogramm empfängt.

In dieser Ausführungsform der vorliegenden Erfindung erfolgt die Steuerung der Speichermanipulations-Programmkomponente über einen Service der von der Laufzeitumgebung bereitgestellt wird, welcher über definierte Serviceschnittstellen der Laufzeitumgebung eine Konfiguration der Speichermanipulations-Programmkomponente zur Laufzeit erlaubt.

Alternativ kann jede der vorangegangenen Ausführungsformen derart ausgestaltet sein, dass eine Steuerung der Speichermanipulations-Programmkomponente durch Kalibriervariablen des Steuergeräteprogramms erfolgt, welche von einem Experimentierprogramm gelesen und geschrieben werden können.

In dieser Ausführungsform werden als Teil des Steuergeräteprogramms Kalibriervariablen definiert, welche einen standardmäßig im Steuergerät vorhandenen Kalibrierservice nutzen, um die Speichermanipulations-Programmkomponente zu steuern. Vorteilhaft ist, dass kein gesonderter Service benötigt wird.

### BESCHREIBUNG DER FIGUREN

Bevorzugte Ausführungsformen der vorliegenden Erfindung werden beispielhaft anhand der beiliegenden Figuren beschrieben. Es zeigen:
Figur 1: Programmarchitektur gemäß AUTOSAR Standard Version 4.0.3
Figur 2: Verschiedene Möglichkeiten zur Integration einer Speichermanipulations-Programmkomponente 100 in das Speicher-Hardware-Abstraktionsmodul 3
Figur 3: Direkte Manipulation des Speichers in einer Offline Simulation
Figur 4: Konfiguration und Steuerung der Speichermanipulations-Programmkomponente

### DETAILLIERTE BESCHREIBUNG

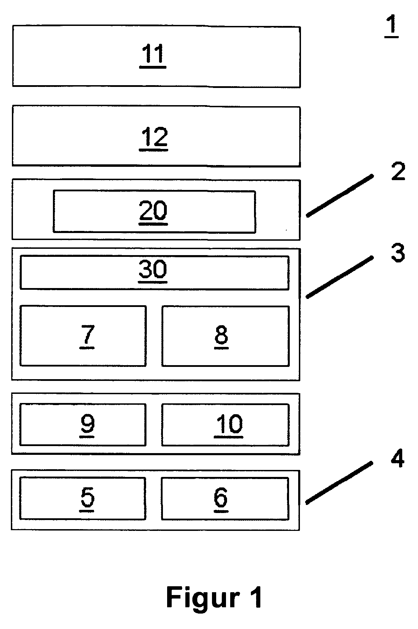

Figur 1 zeigt beispielhaft den Aufbau einer Programmarchitektur 1 gemäß dem AUTOSAR Standard Version 4.0.3. Ähnliche Architekturen finden sich aber auch auf Nicht-AUTOSAR Steuergeräten, so dass die Erfindung entsprechend auch auf Nicht-AUTOSAR ECUs anwendbar ist. Die oberste Schicht bildet das Anwendungsprogramm 11, welches im Rahmen der Anmeldung das Steuergeräteprogramm bildet. Darunter befindet sich die Laufzeitumgebung 12, welche über definierte Schnittstellen auf die unterliegenden Schichten zugreifen kann.

Aufgrund der spezifischen Hardwareeigenschaften von EEPROM- und Flash-Speichern, wie z.B. ein langsamer Schreib-/Lesezugriff, eine begrenzte Anzahl von Schreibzyklen und Nutzung redundanter Blöcke, besitzt ein Steuergerät meistens spezielle Programmmodule 2, sogenannte Speicher-Services, die den Zugriff auf die EEPROM- und Flash-Speicher kapseln und nach außen abstrahieren.

Nichtflüchtige Daten werden in der AUTOSAR Programmarchitektur mittels des Speicher-Managers 20 verwaltet, der zu den Speicher-Services gehört. Der Speicher-Manager greift über das Speicher-Hardware-Abstraktions-Modul 3 auf die Treiber 9, 10 für die verschiedenen Speichertypen 5, 6 zu, womit die Kommunikation mit dem externen Speicherbaustein gekapselt wird. Falls ein externer EEPROM Speicher über ein Serial Peripheral Interface angebunden ist, ist auch der SPI Driver beteiligt,

Unterhalb der Speicher-Abstraktionsprogramm-Schnittstelle 30 verzweigt sich der Speicherzugriff in Abhängigkeit des Speichertypen EEPROM 5 oder Flash 6, wobei die in Tabelle 1 definierten API-Funktionen aufgerufen werden. Ähnliche APIs existieren für die darunter liegenden Module 7 und 8.

**Tabelle 1: APIs der AUTOSAR Speicher-Abstraktions-Schnittstelle 30**

| **API Function** | **Description** |
|---|---|
| void MemIf_SetMode (..) | Sets the mode of the underlying memory abstraction modules. |
| Std_ReturnType MemIf_Read (..) | Reads a block into a buffer. |
| Std_ReturnType MemIf_Write (..) | Writes the contents of a buffer into a block. |
| void MemIf_Cancel (..) | Cancels the ongoing asynchronous operation. |
| MemIf_StatusType MemIf_GetStatus (..) | Returns the status of the underlying memory abstraction module. |
| MemIf_JobResul_tType MemIf_GetJobResult (..) | Returns the result of an asynchronous job. |
| Std_ReturnType MemIf_InvalidateBlock (..) | Invalidates a block. |
| void MemIf_GetVersionInfo (..) | Returns the version info of the Memlf module. |
| Std_ReturnType MemIf_EraseImmediateBlock (..) | Erases a block. |

Die APIs des EEPROM Abstraktions-Moduls 7 und des Flash EEPROM Emulations-Moduls 8 haben diverse Status- und Fehlerzustände, die über das Speicher-Hardware-Abstraktions-Modul 3 an den Speicher-Manager 20 zurückgeliefert werden. Tabelle 2 zeigt mögliche Statuswerte, Tabelle 3 mögliche Fehlercodes der Speicher-Abstraktions-Schnittstelle 30. Die gleichen Werte existieren für die darunter liegenden Module 7 und 8.

**Tabelle 2: Statuswerte der Speicher-Abstraktions-Schnittstelle 30, des EEPROMAbstraktions-Moduls 7 bzw. des Flash EEPROM Emulations-Moduls 8.**

| | | |
|---|---|---|
| ***Name:*** | MemIf StatusType | |
| ***Type:*** | Enumeration | |
| ***Range:*** | MEMIF_UNINIT | The underlying abstraction module or device driver has not been initialized (yet). |
| | MEMIF_IDLE | The underlying abstraction module or device driver is currently idle. |
| | MEMIF_BUSY | The underlying abstraction module or device driver is currently busy. |
| | MEMIF_BUSY-INTERNAL | The underlying abstraction module is busy with internal management operations. The underlying device driver can be busy or idle. |
| ***Description:*** | Denotes the current status of the underlying abstraction module and device drive. | |

**Tabelle 3: Fehlercodes der Speicher-Abstraktions-Schnittstelle 30, des EEPROM-Abstraktions-Moduls 7 bzw. des Flash EEPROM Emulations-Moduls 8**

| | | |
|---|---|---|
| ***Name:*** | MemIf_JobResultType | |
| ***Type:*** | Enumeration | |
| ***Range:*** | MEMIF_JOB_OK | The job has been finished successfully. |
| | MEMIF_JOB FAILED | The job has not been finished successfully. |
| | JOB_PENDING | The job has not yet been finished. |
| | MEMIF_JOB_CANCELED | The job has been canceled. |
| | | |
| | MEMIF_BLOCK_INCONSISTENT | The requested block is inconsistent, it may contain corrupted data. |
| | MEMIF_BLOCK_INVALID | The requested block has been marked as invalid, the requested operation can not be performed. |
| ***Description:*** | Denotes the result of the last job. | |

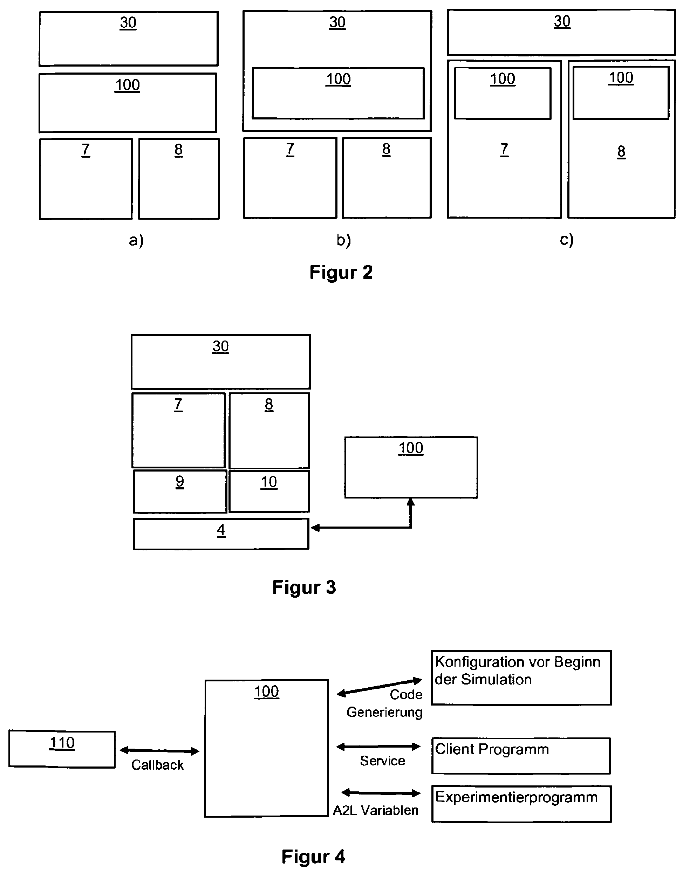

Um die Reaktion des Speichergeräte-Programms auf jeden der Statuswerte und Fehlercodes testen zu können, ist es möglich eine gezielte Manipulation eines oder mehrerer Werte vorzunehmen. Dies geschieht durch die Speichermanipulations-Programmkomponente 100, welche anhand einer ausgewählten Manipulationsfunktion 110 eine bestimmte Manipulation des Speicherzugriffs vornimmt. Die Speichermanipulations-Programmkomponente kann dabei an verschiedenen Stellen der Programmarchitektur verankert werden:
- Zwischen der Speicher-Abstraktions-Schnittstelle 30 und dem EEPROM Abstraktions-Moduls 7 bzw. des Flash EEPROM Emulations-Moduls 8 (z)
- Als Bestandteil der Speicher-Abstraktions- Schnittstelle 30 (Figur 2 (b))
- Jeweils als Bestandteil des EEPROM Abstraktions-Moduls 7 bzw. des Flash EEPROM Emulations-Moduls 8 (Figur 2 (c))

In einer Offline Simulation werden die einzelnen Speicherbereiche vom Simulator zugeteilt. Daher können die Speicherbereiche 4 auch während einer Simulation direkt verändert werden, um Speicherzugriffsfehler zu stimulieren (Figur 3).

Die Speichermanipulations-Programmkomponente ist nur dann aktiv, wenn eine entsprechende Option gesetzt ist, andernfalls verhält sie sich vollkommen transparent, und das Steuergeräteprogramm wird durchlaufen, als wäre die Speichermanipulations-Programmkomponente nicht vorhanden.

Die Speichermanipulations-Programmkomponente kann zur Laufzeit einer Simulation aktiviert werden und abhängig von der ausgewählten Manipulationsfunktion die folgenden Manipulationen vornehmen:
- Manipulation eines zu schreibenden Blocks, d.h. Ersetzen der geschriebenen Werte durch andere Werte, die durch ein Testszenario vorgegeben werden
- Manipulation eines zu lesenden Blocks, d.h. Ersetzen der gelesenen Werte durch andere Werte, die durch ein Testszenario vorgegeben werden
- Manipulation des Returnwertes der Operation.
- Manipulation des Status der Speicher-Abstraktions-Schnittstelle 30 und der darunter liegenden Module 7 und 8
- Manipulation der Bearbeitung von asynchronen Jobs, z.B. Abbruch des Jobs, Verzögerung, Verfälschung des Jobresults.
- Markierung von Speicherblöcken als ungültig.

Zu diesem Zweck bietet die Speichermanipulations-Programmkomponente 100 vordefinierte Manipulationsfunktionen 110 an, die in bestimmten Kontexten aufgerufen werden. Der Anwender kann jedoch auch selbst definierte Manipulationsfunktionen 110 registrieren.

Die Parameter der Manipulationsfunktionen können vorab konfiguriert werden, oder sie werden zur Laufzeit über ein API eingestellt.

Die beschriebenen Manipulationsmöglichkeiten können auf verschiedene Weisen aktiviert werden:
- Einmalige Aktivierung einer Manipulation zu einem absoluten oder relativen Zeitpunkt.
- Periodische Aktivierung einer Manipulation,
- Sporadische Aktivierung einer Manipulation,
- Aktivierung einer Manipulation mit einer vorgegebenen Wahrscheinlichkeitsverteilung.
- Aktivierung einer Manipulation abhängig von einem Ereignis, z.B. x Sekunden nachdem ein bestimmter Job gestartet wurde.

Zur Konfiguration und zur Steuerung der Speichermanipulations-Programmkomponente 100 bestehen somit mehrere Möglichkeiten, die in Figur 4 dargestellt sind.

So kann die Steuerung der Speichermanipulations-Programmkomponente durch Codegenerierung vor einer Kompilation des Steuergeräteprogramms erfolgen, so dass das Verfahren sehr effizient hinsichtlich der Laufzeit ist.

Die Steuerung der Speichermanipulations-Programmkomponente kann alternativ über einen von der Laufzeitumgebung bereitgestellten Service erfolgen, welcher über definierte Serviceschnittstellen der Laufzeitumgebung eine Konfiguration der Speichermanipulations-Programmkomponente zur Laufzeit erlaubt.

Desweiteren kann die Steuerung als Teil des Steuergeräteprogramms über Kalibriervariablen definiert werden. Kalibriervariablen sind dabei standardmäßig im Steuergerät vorhanden, so dass auf den ohnehin vorhandenen Kalibrierservice zurückgegriffen werden kann.

Die erfolgte detaillierte Beschreibung hat illustrativen Charakter und ist nicht restriktiv zu verstehen. Der Fachmann entnimmt der Beschreibung mögliche Variationen und Kombinationen der beschriebenen Ausführungsformen. Der Schutzbereich ist daher nicht anhand der Beschreibung einzugrenzen, sondern allein anhand der Ansprüche zu bestimmen.

## Patentansprüche

1. Verfahren zum Manipulieren eines ersten Speicherzugriffs, welcher über ein Steuergeräteprogramm einer virtuellen oder realen elektronischen Steuergeräteeinheit durchgeführt wird, wobei das Manipulieren des Speicherzugriffs durch eine Speichermanipulations-Programmkomponente (100) erfolgt, und wobei das Verfahren umfasst:
Bereitstellen eines Satzes von Manipulationsfunktionen (110),
wobei der Satz von Manipulationsfunktionen zumindest eine Manipulationsfunktion umfasst, die einen zu lesenden Datenblock manipuliert, indem gelesene Datenwerte durch andere vorbestimmte Datenwerte ersetzt werden,
Auswählen mindestens einer Manipulationsfunktion (110),
Aktivieren der Speichermanipulations-Programmkomponente (100), welche einen von dem Steuergeräteprogramm veranlassten Speicherzugriff gemäß der ausgewählten Manipulationsfunktion (110) beim Ausführen des Steuergeräteprogramms verändert
**dadurch gekennzeichnet, dass** die Speichermanipulations-Programmkomponente (100) eine eigenständige Programmkomponente bildet und über definierte Schnittstellen mit einer Speicherabstraktionsschnittstellen-Programmkomponente (30) und Speicherabstraktions-Programmkomponenten (7) verbunden ist oder dass die Speichermanipulations-Programmkomponente (100) einen Teil einer Speicherabstraktionsschnittstellen-Programmkomponente (30) und/oder Speicherabstraktions-Programmkomponenten (7) bildet,
wobei der Speicherzugriff auf nichtflüchtige Speicher erfolgt und von der Speicherabstraktions-Programmkomponente (7) gekapselt wird.

2. Verfahren nach Anspruch 1, wobei die Manipulationsfunktion (110) einen Wiedergabewert eines Speicherzugriffs überschreibt.

3. Verfahren nach Anspruch 1, wobei die Manipulationsfunktion (110) einen Status einer Speicherabstraktionsschnittstelle-Programmkomponente (30) und/oder verbundener Speicher-Abstraktions-Programmkomponenten (7, 8) überschreibt.

4. Verfahren nach Anspruch 1, wobei der erste Speicherzugriff (110) im Rahmen eines ersten Jobs ausgeführt wird und mindestens ein zweiter Speicherzugriff im Rahmen eines zweiten Jobs ausgeführt wird, wobei die Bearbeitung der Jobs asynchron erfolgt und wobei die Manipulationsfunktion eine Bearbeitung der asynchronen Jobs manipuliert, indem sie die Jobs abbricht, verzögert, und/oder ein Jobresultat verfälscht.

5. Verfahren nach Anspruch 1, wobei die Manipulationsfunktion Speicherblöcke als ungültig markiert.

6. Verfahren nach einem der vorangegangenen Ansprüche, wobei ein Ausführen der Manipulationsfunktion (110) einmalig zu einem absoluten oder relativen Zeitpunkt erfolgt.

7. Verfahren nach einem der Ansprüche 1-5, wobei ein Ausführen der Manipulationsfunktion (110)periodisch über eine in einem Testszenario bestimmte Laufzeit erfolgt und/oder wobei ein Ausführen der Manipulationsfunktion sporadische über eine in einem Testszenario bestimmte Laufzeit erfolgt und/oder wobei ein Ausführen der Manipulationsfunktion mit einer vorgegebenen Wahrscheinlichkeitsverteilung erfolgt und/oder wobei ein Ausführen der Manipulationsfunktion abhängig von einem vorbestimmten Ereignis erfolgt.

8. Verfahren nach einem der Ansprüche 1-7, wobei die Speichermanipulations-Programmkomponente (100) direkten Zugriff auf eine Speicherbank einer elektronischen Steuergerätekomponente hat.

9. Verfahren nach einem der Ansprüche 1-8, wobei eine Steuerung der Speicher-manipulations-Programmkomponente (100) durch Codegenerierung vor einer Kompilation des Steuergeräteprogramms erfolgt.

10. Verfahren nach einem der Ansprüche 1-9, wobei eine Steuerung der Speichermanipulations-Programmkomponente (100) durch einen Service erfolgt, der von dem Steuergeräteprogram definiert ist und der Befehle von einem Bedienprogramm empfängt.

11. Verfahren nach einem der Ansprüche 1-10, wobei eine Steuerung der Speichermanipulations-Programmkomponente (100) durch Kalibriervariablen des Steuergeräteprogramms erfolgt, welche von einem Experimentierprogramm gelesen und geschrieben werden können.

## Claims

1. A method for manipulating a first memory access performed by means of a control device program of a virtual or real electronic control device unit, the memory access being manipulated by a memory-manipulation program component (100), the method comprising:
providing a set of manipulation functions (110),
the set of manipulation functions comprising at least one manipulation function manipulating a data block to be read, in that read data values are replaced by other predetermined data values,
selecting at least one manipulation function (110),
activating the memory-manipulation program component (100) modifying a memory access initiated by the control device program according to the selected manipulation function (110) when the control device program is executed,
**characterized in that** the memory-manipulation program component (100) forms a discrete program component and is connected to a memory-abstraction interface program component (30) and memory-abstraction program components (7) by means of defined interfaces, or that the memory-manipulation program component (100) forms part of a memory-abstraction interface program component (30) and/or memory-abstraction program component (7),
wherein the memory access is to non-volatile memory and is encapsulated by the memory-abstraction program component (7).

2. The method according to claim 1, wherein the manipulation function (110) overwrites a reproduction value of a memory access.

3. The method according to claim 1, wherein the manipulation function (110) overwrites a status of a memory-abstraction interface program component (30) and/or connected memory-abstraction program components (7, 8).

4. The method according to claim 1, wherein the first memory access (110) is performed in the course of a first job and at least one second memory access is performed in the course of a second job, wherein the processing of the jobs is asynchronous, and wherein the manipulation function manipulates processing of the asynchronous jobs by interrupting or delaying the jobs and/or falsifying a job result.

5. The method according to claim 1, wherein the manipulation function marks memory blocks as invalid.

6. The method according to any one of the preceding claims, wherein the manipulation function (110) is executed once at an absolute or relative point in time.

7. The method according to any one of the claims 1 through 5, wherein the manipulation function (110) is executed periodically over a running time determined in a test scenario, and/or wherein the manipulation function is executed sporadically over a running time determined in a test scenario, and/or wherein the manipulation function is executed at a prescribed probability distribution, and/or wherein the manipulation function is executed depending on a predetermined event.

8. The method according to any one of the claims 1 through 7, wherein the memory-manipulation program component (100) has direct access to a memory bank of an electronic control device component.

9. The method according to any one of the claims 1 through 8, wherein the memory-manipulation program component (100) is controlled by generating code prior to compilation of the control device program.

10. Method according to any one of the claims 1 through 9, wherein the memory-manipulation program component (100) is controlled by a service defined by the control device program and said service receives commands from an operator-control program.

11. The method according to any one of the claims 1 through 10, wherein the memory-manipulation program component (100) is controlled by calibration variables of the control device program, and said variables can be read and written by an experimentation program.

## Revendications

1. Procédé pour manipuler un premier accès à une mémoire, lequel est exécuté via un programme d'appareil de commande d'une unité d'appareil de commande électronique fictive ou réelle, sachant que la manipulation de l'accès à la mémoire est effectuée par un composant (100) de programme de manipulation de mémoire, et sachant que le procédé comprend les opérations suivantes :
fournir un ensemble de fonctions de manipulation (110),
sachant que l'ensemble de fonctions de manipulation comprend au moins une fonction de manipulation qui manipule un bloc de données devant être lu en remplaçant des valeurs de données lues par d'autres valeurs de données prédéterminées,
sélectionner au moins une fonction de manipulation (110),
activer le composant (100) de programme de manipulation de mémoire qui modifie un accès à la mémoire déclenché par le programme d'appareil de commande selon la fonction de manipulation (100) sélectionnée lors de l'exécution du programme d'appareil de commande,
**caractérisé en ce que** le composant (100) de programme de manipulation de mémoire forme un composant de programme séparé et il est relié à un composant (30) de programme d'interface d'abstraction de mémoire et à des composants (7) de programme d'abstraction de mémoire via des interfaces définies ou que le composant (100) de programme de manipulation de mémoire forme une partie d'un composant (30) de programme d'interface d'abstraction de mémoire et/ou d'un composant (7) de programme d'abstraction de mémoire,
sachant que l'accès à la mémoire a lieu à des mémoires non volatiles et est encapsulé par le composant (7) de programme d'abstraction de mémoire.

2. Procédé selon la revendication 1, dans lequel la fonction de manipulation (110) remplace par superposition d'écriture une valeur de reproduction d'un accès à la mémoire.

3. Procédé selon la revendication 1, dans lequel la fonction de manipulation (110) remplace par superposition d'écriture un état d'un composant (30) de programme d'interface d'abstraction de mémoire et/ou des composants (7, 8) de programme d'abstraction de mémoire.

4. Procédé selon la revendication 1, dans lequel le premier accès (110) à la mémoire est exécuté dans le cadre d'une première tâche et au moins un second accès à la mémoire est exécuté dans le cadre d'une seconde tâche, sachant que le traitement des tâches s'effectue de manière asynchrone et sachant que la fonction de manipulation manipule un traitement des tâches asynchrones en arrêtant, en retardant et/ou en falsifiant un résultat de tâche.

5. Procédé selon la revendication 1, dans lequel la fonction de manipulation marque des blocs de mémoire en tant que non valables.

6. Procédé selon l'une des revendications précédentes, dans lequel une exécution de la fonction de manipulation (110) a lieu une fois à un instant absolu ou relatif.

7. Procédé selon l'une des revendications 1-5, dans lequel une exécution de la fonction de manipulation (110) a lieu périodiquement sur une durée déterminée dans un scénario de test et/ou dans lequel une exécution de la fonction de manipulation a lieu sporadiquement sur une durée déterminée dans un scénario de test et/ou dans lequel une exécution de la fonction de manipulation a lieu avec une distribution de probabilité allouée et/ou dans lequel une exécution de la fonction de manipulation a lieu en fonction d'un événement prédéterminé.

8. Procédé selon l'une des revendications 1-7, dans lequel composant (100) de programme de manipulation de mémoire a un accès direct à un banc de mémoire d'un composant d'appareil de commande électronique.

9. Procédé selon l'une des revendications 1-8, dans lequel une commande du composant (100) de programme de manipulation de mémoire a lieu par génération de code avant une compilation du programme d'appareil de commande.

10. Procédé selon l'une des revendications 1-9, dans lequel une commande du composant (100) de programme de manipulation de mémoire a lieu par un service qui est défini par le programme d'appareil de commande et qui reçoit des instructions depuis un programme de commande.

11. Procédé selon l'une des revendications 1-10, dans lequel une commande du composant (100) de programme de manipulation de mémoire a lieu par des variables d'étalonnage du programme d'appareil de commande, qui peuvent être lues et écrites par un programme d'expérimentation.
